# EUROPÄISCHE PATENTSCHRIFT

(11) **EP 0 487 595 B1**
(45) Veröffentlichungstag und Bekanntmachung des Hinweises auf die Patenterteilung: **30.11.1994**
(21) Anmeldenummer: 90912829.0
(22) Anmeldetag: 16.08.1990
(51) Int. Cl.: H04N 5/262, H04N 5/44

(54) **VERFAHREN ZUR EXPANSION EINES DIGITALEN SIGNALS**
PROCESS FOR EXPANDING A DIGITAL SIGNAL
PROCEDE POUR L'EXPANSION D'UN SIGNAL NUMERIQUE

(30) Priorität: 25.08.1989 DE 3928189
(43) Veröffentlichungstag der Anmeldung: 03.06.1992
(73) Patentinhaber: Deutsche Thomson-Brandt GmbH, 78010 Villingen-Schwenningen (DE)
(72) Erfinder: GUILLON, Jean-Claude, F-67150 Erstein (FR); RUFRAY, Jean-Claude, F-35000 Cesson-Sevigen (FR)
(74) Vertreter: Einsel, Robert, Dipl.-Ing.
(86) Internationale Anmeldenummer: EP9001337
(87) Internationale Veröffentlichungsnummer: WO9103124

(56) Entgegenhaltungen:
- EP-A- 0 309 877
- JP-A- 1 194 082
- US-A- 4 814 860

## Beschreibung

Die Erfindung betrifft ein Verfahren zur Expansion eines digitalen Signals gemäß dem Oberbegriff des Patentanspruchs 1 sowie eine Schaltungsanordnung zur Durchführung des Verfahrens.

Aus DE-A- 37 22 172 ist ein Verfahren zur Vergrößerung der räumlichen Abmessung eines Bildes bekannt, bei dem die Vergrößerung der Amplitude der vertikalen Ablenkung mit einer digitalen Vergrößerung des Signals in horizontaler Richtung kombiniert ist. Bei diesem Verfahren wird, bedingt durch Vergrößerung der Amplitude in der vertikalen Ablenkung, die Anzahl der Zeilen in vertikaler Richtung verkleinert, so daß die Zeilenstruktur sichtbar wird. Die Sichtbarkeit der Zeilenstruktur kann drastisch reduziert werden, wenn eine doppelte Abtastablenkung verwendet wird, wie sie in DE-A- 37 22 170 beschrieben ist. Das dort beschriebene Lösungsprinzip verwendet Standard-RAM's als Speicher.

Der Erfindung liegt die Aufgabe zugrunde, ein Verfahren sowie eine Schaltungsanordnung zur Veränderung der räumlichen Abmessung eines Bildes anzugeben.

Diese Aufgabe wird durch die im Anspruch 1 angegebenen Merkmale gelöst. Weiterbildungen der Erfindung sind in den Unteransprüchen wiedergegeben.

Bei der erfindungsgemäßen Lösung wird ein Videospeicher mit zwei Peripherieschnittstellen verwendet, wie er in DE-A- 37 33 012 (EP-A-0 309 807) beschrieben ist.

Zur Veränderung der räumlichen Abmessung eines Bildes sind unter Verwendung des oben angegebenen Bildspeichers zwei Verfahren möglich.
1. Die Daten werden in den Speicher geschrieben ohne vorherige Expansion. Die Expansion der Bilddaten wird bei dem Auslesen des Bildspeichers durchgeführt.
2. Die Expansion der Daten wird während des Schreibens der Daten in den Bildspeicher durchgeführt. Für die Wiedergabe wird der Blldspeicher zeilenweise ausgelesen.

Der erfindungsgemäß verwendete Bildspeicher hat folgende Charakteristika:
Die zwei peripheren Schnittstellen des Videospeichers werden Takte zugeführt, welche ein ganzzeiliges Vielfaches zueinander aufweisen. Zum Beispiel kann folgende Kombination verwendet werden:
- Eingang A: 13,5 MHz 13,5 MHz 27,0 MHz 27,0 MHz
- Eingang B: 27,0 MHz 13,5 MHz 13,5 MHz 27,0 MHz

Um die erforderliche Lese- und Schreibgeschwindigkeit zu erzielen, wird die Übertragung zwischen den peripheren Schnittstellen und dem Speicher parallel durchgeführt. Die Daten werden in Blöcken von zum Beispiel zwölf Abtastwerten übertragen.

Bedingt durch die hohe Datenrate, welche eine sehr hohe Zugriffszeit auf den Speicher erfordert, können die peripheren Schnittstellen Blöcke von zum Beispiel 24 Abtastwerten lesen.

Die Erfindung wird nachfolgend anhand von zwei Ausführungsbeispielen, die in der Zeichnung dargestellt sind, näher erläutert. Es zeigen:
- Fig. 1: eine Speicherorganisation für den doppelten Abtastmode
- Fig. 2: ein Zeitdiagramm der Eingangs- und Ausgangsdaten
- Fig. 3: einen Puffer
- Fig. 4: ein Zeitdiagramm der Taktanpassungsschaltung
- Fig. 5: weiteres Zeitdiagramm der Eingangs- und Ausgangsdaten
- Fig. 6: eine Schaltungsanordnung zur Dehnung der Luminanzkomponenten
- Fig. 7: eine Schaltung zur Dehnung der Chrominanzkomponenten

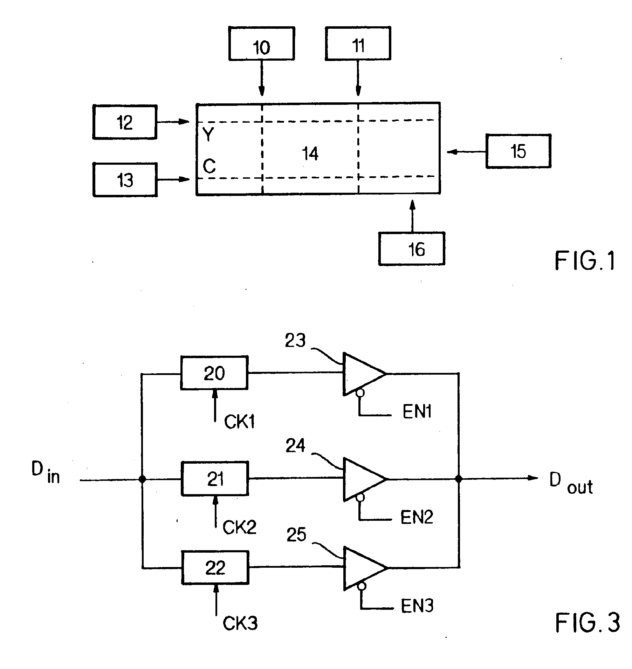

Fig. 1 zeigt eine Speicherorganisation eines Speichers 14 mit einem doppelten Abtastmode. Die Daten werden wie folgt in den Speicher 14 eingeschrieben:
Ein erster horizontaler Zähler 11 steuert die Schreibdaten einer Zeile, ein erster vertikaler Zähler 12 steuert das Schreiben der Luminanzkomponenten Y einer Spalte und ein vertikaler Zähler 13 steuert das Schreiben der Chrominanzkomponenten einer Spalte. Die Daten werden blockweise in den Speicher geschrieben, wobei ein Block zum Beispiel zwölf Abtastwerte aufweisen kann. Die Daten der Blöcke enthalten alternierend Luminanz- Y und Chrominanz-Signalanteile C.

Das Lesen der Daten erfolgt auf folgende Weise:

Der Speicher 14 weist einen ersten horizontalen Lesezähler 16 für die Luminanz Y auf. Diese Daten werden auf eine erste periphere Schnittstelle B gegeben. Der vertikale Schreibzähler I3 wird für den Lesezyklus als vertikaler Lesezähler 13 für die Chrominanz-Signalanteile C für die periphere Schnittstelle A verwendet. Für die Luminanz-Signalkomponente Y wird ein vertikaler Lesezähler 15 verwendet, der die Daten auf die periphere Schnittstelle B gibt. Der horizontale Schreibzähler 10 wird für den Lesezyklus als horizontaler Lesezähler verwendet und gibt die Chrominanz-Signalkomponenten C auf die periphere Schnittstelle A. Die peripheren Schnittstellen A und B werden dazu verwendet, um die Daten doppelt auszulesen. Dabei wird die Chrominanz C der Schnittstelle A und die Luminanz Y der Schnittstelle B zugeführt.

Fig. 2 zeigt ein Zeitdiagramm der Eingangsdaten Dᵢₙ und der Ausgangsdaten an den peripheren Schnittstellen A und B. Die Eingangsdaten Dᵢₙ werden abwechselnd als Luminanzkomponenten Y und Chrominanzkomponente C in den Speicher 14 eingegeben. Beim Auslesen der Daten aus dem Speicher 14 werden die Chrominanzkomponenten C1, C2,... auf die periphere Schnittstelle A, die Luminanzkomponenten Y1, Y2, ... auf die periphere Schnittstelle B geführt. Wie der Fig. 2 zu entnehmen ist, werden die Luminanzkomponenten Y5, Y6 und die Chrominanzkomponenten C5, C6 wiederholt ausgelesen. Für den Auslesevorgang werden jeweils zwei Komponenten C1, C2; Y1, Y2 ... zu einem Block zusammengefaßt.

Wenn beispielsweise der Schreibtakt 27 MHz beträgt und eine Bildvergrößerung im Verhältnis von 4/3 erzielt werden soll, muß der Lesetakt 20,25 MHz betragen. Der Speicher 14 wird mit einer Lesefrequenz von 27 MHz gelesen. Durch ein spezielles Ausleseverfahren wird jedoch eine Durchschnittsfrequenz von 20,25 MHz erzielt.

Um die Durchschnittsfrequenz von 20,25 MHz zu erzielen, wird von vier Blöcken mit zum Beispiel 24 Samples je ein Block wiederholt ausgelesen. Beispielsweise kann der dritte Block wiederholt ausgelesen werden, so daß verhindert wird, daß der horizontale Fehler erhöht wird.

Um diese Auslesefrequenz zu erzielen, wird ein Puffer entsprechend Fig. 3 verwendet. Die Daten Dᵢₙ werden parallel Schieberegistern 20, 21, 22 zugeführt. An diese Schieberegister 20, 21, 22 schließt sich je ein steuerbarer Verstärker 23, 24, 25 an, deren Ausgänge zusammengeführt auf einen Ausgang Dₒᵤₜ führen. Die Schieberegister 20, 21, 22 haben Steuereingänge CK1, CK2 und CK3. Die steuerbaren Verstärker 23, 24, 25 haben Steuereingänge EN1, EN2, EN3.

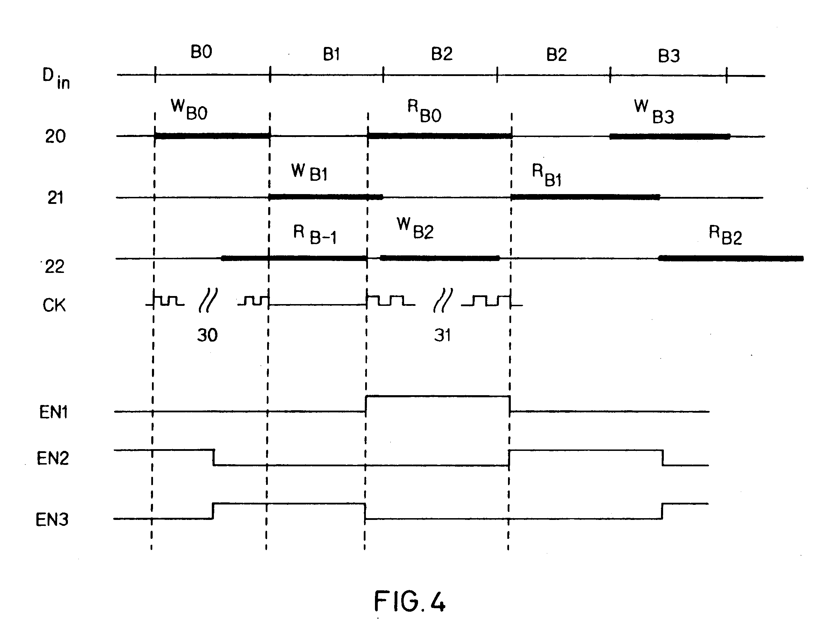

Fig. 4 zeigt ein Zeitdiagramm des Puffers gemäß Fig. 3. Die Eingangsdaten Dᵢₙ bestehen aus vier Blöcken B0 bis B3. Während einer ersten Blockperiode wird das Schieberegister 20 mit den Daten des Blocks W_{B0} beschreiben. Während einer zweiten Blockperiode B1 wird das Schieberegister 21 mit dem Block W_{B1} beschreiben. In einer dritten Blockperiode B2 wird das Schieberegister 22 mit den Daten des Blocks W_{B2} beschrieben. Diese Blockperiode B2 wird zur Erzielung der Durchschnittsfrequenz von 20,25 MHz wiederholt, ohne daß ein Schreibvorgang durchgeführt wird. In einer vierten Blockperiode B4 wird das Schieberegister 20 mit den Daten des Blocks W_{B3} beschrieben. Der Schreibvorgang geschieht mit einer Taktfrequenz von 27 MHz. Um eine Expansion zu erzielen, werden die Daten der Blöcke B0 bis B3 mit einer Durchschnittsfrequenz von 20,25 MHz gelesen. Dazu wird auf die Eingänge der steuerbaren Verstärker 23, 24, 25 ein Enabelsignal EN1, EN2 und EN3 gegeben. Die Zeitdauer der Enabelsignale entspricht 20,25 MHz und ist in Fig. 4 mit der Zeitdauer 31 gezeigt.

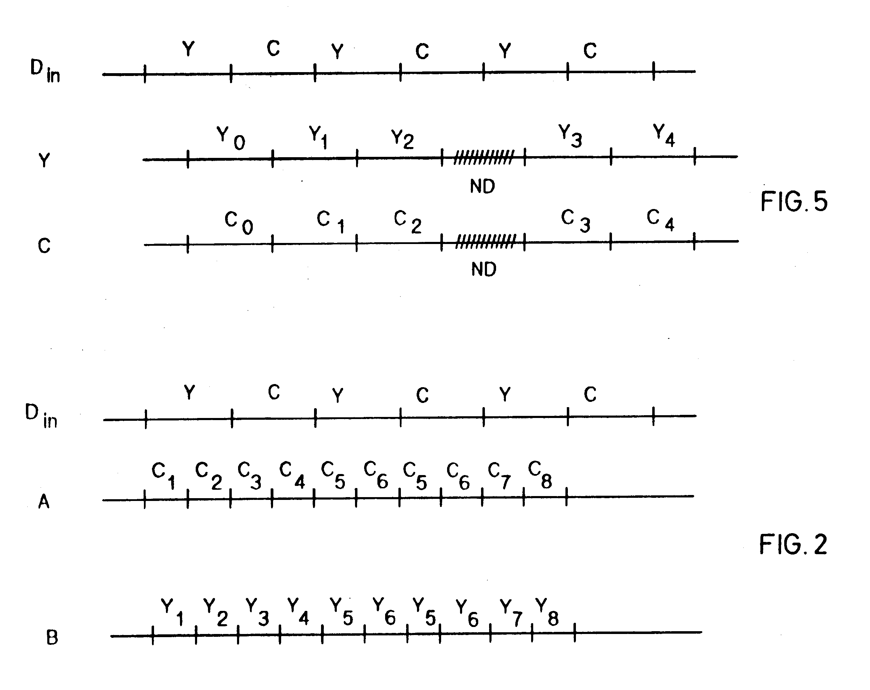

Fig. 5 zeigt das Schreiben der Eingangsdaten in den Speicher 14 sowie die Organisation der Luminanzkomponenten Y und der Chrominanzkomponenten C nach dem Schreiben in den Speicher 14. Beim Schreiben der Luminanzkomponenten Y mittel der Zähler 12, 11 und der Chrominanzkomponenten C, werden zur Taktanpassung Speicherbereiche ND nicht beschrieben. Für den Auslesevorgang werden die Daten entsprechend der Reihenfolge, wie sie in den Speicher geschrieben wurden, ausgelesen und Y/C-komponentenweise auf die periphere Schnittstelle A, B geführt.

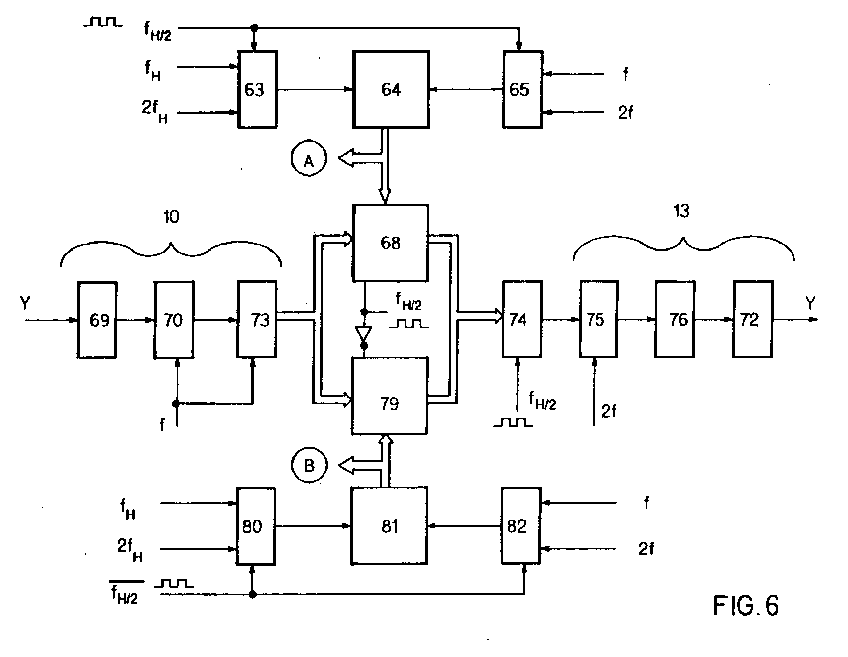

Fig. 6 zeigt ein Blockschaltbild einer erfindungsgemäßen Ausführungsform. Ein ankommender Signalweg 10 für das Luminanzsignal Y mit einem Analog/Digital-Wandler 70 wird auf einen ersten Schreiblesespeicher 68 und einen zweiten Schreiblesespeicher 79 verzweigt und anschließend über einen Multiplexer 74 wieder zu einem abgehenden Signalweg 13 für das Luminanzsignal Y mit einem Digital/Analog-Wandler 77 zusammengeführt. Die Schreiblesespeicher 68 und 79 verfügen über Dateneingänge, Datenausgänge, Schreibelesesteuereingänge sowie Adresseneingänge. Die Adresseneingänge der Schreiblesespeicher 68 und 79 sind mit Zählausgängen von Adressenzählern 64 und 81 verbunden, die ihrerseits Rücksetzeingänge sowie Takteingänge aufweisen. Die Rücksetzeingänge werden über Multiplexer 63 und 80 und die Takteingänge über Multiplexer 65 und 82 angesteuert. Der Übersichtlichkeit wegen sind die einzelnen Steuerleitungen nicht eingezeichnet sondern nur die Signale an den entsprechenden Steuereingangs- bzw. ausgangsklemmen angegeben. Bei den Steuersignalen handelt es sich um Schaltsignale f_{H/2} und f_{H/2} also das inverse Signal zu f_{h/2}. Diese Signale sind symmetrische Schaltsignale und ändern ihre Zustände nach jeder Zeilenperiode des übertragenen oder wiedergegebenen Bildsignals. Die Schaltsignale dienen zur wechselweisen Umschaltung der Schreiblesespeicher 68 und 79 über Steuereingänge von der Betriebsart "Schreiben" auf die Betriebsart "Lesen" und umgekehrt. Außerdem wird ein Demultiplexer 74 durch das Schaltsignal F_{H/2} angesteuert, so daß während jeder Zeilenperiode einmal abwechselnd der Datenausgang des Schreiblesespeichers 68 zweimal und der Datenausgang des Schreib/Lesespeichers 79 zweimal auf den abgehenden Signalweg geschaltet wird. Schließlich werden noch die Multiplexer 63, 65 mit dem Schaltsignal f_{H/2} und die Multiplexer 80, 82 mit dem inversen Schaltsignal f_{H/2} geschaltet.

Die Steuersignale f_{H/2} und 2f_{H} sind Rücksetzsignale für die Zähler 64 und 81 wie sie in P 37 22 170 in Fig. 1c und d beschrieben sind .

Die Frequenz des Rücksetzsignals f₄ entspricht betragsmäßig der Zeilenfrequenz des übertragenen oder wiedergegebenen Bildes und die Frequenz des Signals 2f_{H} entspricht betragsmäßig der Zeilenfrequenz des dargestellten Bildes. In diesem Fall ist die Frequenz des Signals 2f_{H} doppelt so groß wie die Frequenz des Signals f₄. Schließlich werden noch Taktsignale erzeugt, die den Zählern 64 und 81 über die Multiplexer 65 und 82 den Takteingängen zugeführt werden. Es handelt sich um Taktsignale f für die Betriebsart "Schreiben" und Taktsignale 2f für die Betriebsart "Lesen". Die Frequenz der Taktsignale f, 2f entspricht der Anzahl der Bildpunkte jeder Zeile multipliziert mit der jeweiligen Zeilenfrequenz. Im vorliegenden Fall ist deshalb die Taktfrequenz des Signals 2f doppelt so groß wie diejenige des Signals f.

Die Bildsignale erreichen über den ankommenden Signalweg 10 in digitaler Form die Dateneingänge der Schreiblesespeicher 68 und 79. Es wird angenommen, daß im Zeitpunkt t_{O} der Schreiblesespeicher 68 in der Betriebsart "Schreiben" und der Speicher 79 in der Betriebsart "Lesen" ist. Dann ist der Multiplexer 63 so gesteuert, daß er Rücksetzsignale f_{H} zum Rücksetzeingang durchschaltet und der Multiplexer 80 so gesteuert, daß er Rücksetzsignale 2f zum Eingang des Zählers 81 durchschaltet. Der Multiplexer 65 ist ferner so geschaltet, daß er Taktsignale f zum Takteingang des Zählers 64 durchschaltet und der Multiplexer 82 schaltet Taktsignale 2f zum Takteingang des Zählers 81 durch. Anschließend werden die Bilddaten der Zeile n in den Schreiblesespeicher 68 eingeschrieben, indem alle benötigten Speicherplätze nacheinander adressiert werden. Im Schreiblesespeicher 79 waren bereits die Bilddaten der vorhergehenden Zeile n-1 eingeschrieben worden und diese werden nun im Zeitpunkt t₁ ausgelesen und über dem Demultiplexer 79 auf den abgehenden Signalweg 13 gegeben. In dem zur Verfügung stehenden Zeitraum zwischen t₁ und t₀ werden die Speicherplätze im Schreiblesespeicher 79 in zwei übereinstimmenden Zyklen adressiert, die Bildsignale also zweimal ausgelesen. Anschließend werden die Schreiblesespeicher 68 und 79 in die jeweils andere Betriebsart versetzt, also aus dem Schreiblesespeicher 68 werden die zuvor gespeicherten Bildsignale ausgelesen und in den Schreiblesespeicher 79 die Bilddaten der nun übertragenen oder wiedergegebenen Zeile eingeschrieben. Die zuvor gespeicherten Bilddaten gehen dabei verloren. Um den Ausgang des Schreiblesespeichers 68 auf den abgehenden Signalweg 13 zu schalten, wird der Demultiplexer 74 umgeschaltet. Dieser beschriebene Vorgang wiederholt sich nun nach jeder Zeilenperiode des übertragenen oder wiedergegebenen Bildsignals.

Die Adressenausgänge des Zählers 64 führen auf eine periphere Schnittstelle A und die Adressenausgänge des Zählers 64 auf eine periphere Schnittstelle B.

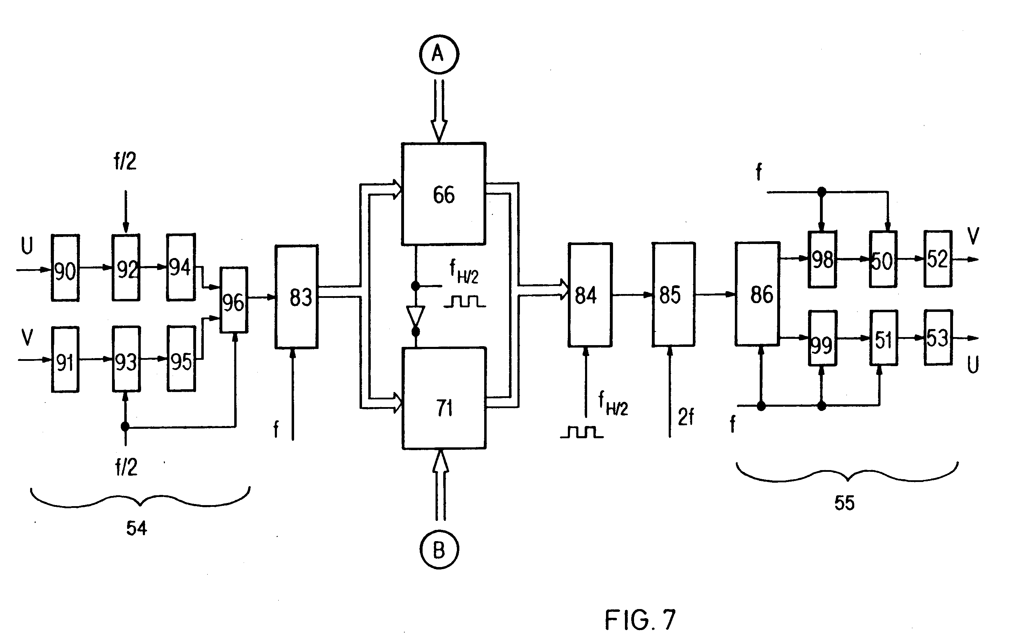

Fig. 7 zeigt die Signalverarbeitung für die Chrominanz-Signalanteile U, V. Die Steuersignale werden über die Schnittstellen A, B den Schreib/Lesespeichern 66, 71 zugeführt. Die Signalverarbeitung verläuft analog zu Fig. 6. Die Chrominanz Signalanteile werden über einen ankommenden Signalweg 54 einem Multiplexer 96 zugeführt. Die Signalkomponenten U, V werden dann über Filter 90, 91, A/D-Wandlern 92, 93 und D-Flip-Flops 94, 95 dem Multiplexer 93 zugeführt. An den Multiplexer 96 schließt sich ein Seriell/Parallel-Konverter 83 an, dessen Ausgangsdaten den Schreib/Lesespeicher 66, 71 zugeführt werden. Die Ausgangsdaten der Schreib/Lesespeicher 66, 71 werden über einen Multiplexer 84 und einem D-Flip-Flop 85 einem abgehenden Signalweg 55 zugeführt, der aus einem Demultiplexer 86, sowie je einem D-Flip-Flop 98, 99, je einem D/A-Wandler 50, 51 und einem Filter 52, 53 besteht.

Die A/D-Wandler 92, 93 und der Multiplexer 96 werden mit dem halben Taktsignal f/2, das D-Flip-Flop 85 mit dem doppelten Taktsignal 2f, der Seriell/Parallel-Konverter 83, der Multiplexer 86, die D-Flip-Flops 98, 99 und die D/A-Wandler 50, 51 mit dem Taktsignal f getaktet.

## Patentansprüche

1. Verfahren zur Expansion von digitalen Video-Signalen mit einem Expansionsverhältnis von M:N mit M > N, wobei Bildpunkt-Werte blockweise in einen Speicher (14) eingeschrieben und danach aus diesem Speicher ausgelesen werden, **dadurch gekennzeichnet,** daß der Speicher für Zeilen und für Spalten der Video-Signale beim Lesen und beim Schreiben getrennt adressiert werden kann, wobei die Schreib- und Lesetakte gleich sind, und daß jeweils M Blöcke von Bildpunkt-Werten ein- bzw. ausgelesen werden, wobei nach dem Auslesen jeweils nur die Bildpunktwerte von N Blöcken weiterverwendet und nachfolgenden Zwischenspeichern (20, 21, 22) zugeführt werden, die mit einem entsprechend dem Faktor N:M reduzierten Takt expandierte, kontinuierliche Videosignale abgeben.

2. Verfahren nach Anspruch 1, **dadurch gekennzeichnet,** daß der Speicher (14) für Luminanz-Werte (Y) und für Chrominanz-Werte (C) getrennt adressiert werden kann.

3. Verfahren nach Anspruch 2, **dadurch gekennzeichnet,** daß für die Adressierung von Zeilen von Chrominanz-Werten (C) beim Schreiben und beim Lesen ein gleicher vertikaler Zähler (13) verwendet wird

4. Verfahren nach einem oder mehreren der Ansprüche 1 bis 3, **dadurch gekennzeichnet,** daß M = 4 und N = 3 ist.

5. Verfahren nach einem oder mehreren der Ansprüche 1 bis 4, **dadurch gekennzeichnet,** daß als Speicher (14) ein Videospeicher mit zwei peripheren Schnittstellen (A, B) verwendet wird und beim Auslesen die Luminanz-Werte der ersten Schnittstelle (B) und die Chrominanz-Werte der zweiten Schnittstelle (A) zugeführt werden.

## Claims

1. A method for the expansion of digital signals with an expansion ratio of M:N with M>N, in which picture point values are written in blocks into a memory (14) and thereafter are read out of said memory, characterised in that the memory can be separately addressed for rows and columns of the video signal during reading and during writing, the writing and reading clock rates being the same, and in that in each case M blocks of picture point values are read in or out, in which after the reading out in each case only the picture point values of N blocks are used further and fed to subsequent intermediate stores (20,21,22) which supply expanded, continuous video signals with a clock rate reduced according to the factor N:M.

2. A method according to claim 1, characterised in that the memory (14) can be addressed separately for luminance values (Y) and chrominance values (C).

3. A method according to claim 2, characterised in that for the addressing of rows of chrominance values (C) a similar vertical counter (13) is used during writing and during reading.

4. A method according to one or more of claims 1 to 3, characterised in that M=4 and N=3.

5. A method according to one or more of claims 1 to 4, characterised in that there is used as the memory (14) a video store with two peripheral interfaces (A,B) and during the reading out the luminance values are supplied to the first interface (B) and the chrominance values are supplied to the second interface (A).

## Revendications

1. Procédé pour l'expansion de signaux vidéo numériques avec un rapport d'expansion de M:N avec M > N, les valeurs des pixels étant inscrites bloc par bloc dans une mémoire (14) puis lues à partir de cette mémoire, caractérisé en ce que la mémoire peut être adressée séparément pour les lignes et pour les colonnes des signaux vidéo, lors de la lecture et lors de l'écriture, les cadences d'écriture et de lecture étant identiques et que chaque fois M blocs de valeurs de pixels sont écrits ou lus, selon le cas, seules les valeurs de pixels de N blocs étant utilisées après la lecture et puis acheminées vers les mémoires tampon (20, 21, 22), qui émettent des signaux vidéo continus étendus par une cadence réduite selon le facteur N:M.

2. Procédé selon revendication 1, caractérisé en ce que la mémoire (14) peut être adressée séparément pour des valeurs de luminance (Y) et des valeurs de chrominance (C).

3. Procédé selon revendication 2, caractérisé en ce que, pour l'adressage des lignes de valeurs de chrominance (C) un compteur vertical (13) identique est utilisé pour l'écriture et la lecture.

4. Procédé selon l'une ou plusieurs des revendications 1 à 3, caractérisé en ce que M = 4 et N = 3.

5. Procédé selon l'une ou plusieurs des revendications 1 à 4, caractérisé en ce que, comme mémoire (14), l'on utilise une mémoire vidéo avec deux interfaces de périphériques (A, B) et que lors de la lecture, les valeurs de luminance sont acheminées vers la première interface (B) et les valeurs de chrominance vers la seconde interface (A).
